# EUROPEAN PATENT SPECIFICATION

(11) **EP 1 188 949 B1**
(45) Date of publication and mention of the grant of the patent: **10.05.2006**
(21) Application number: 01120397.3
(22) Date of filing: 27.08.2001
(51) Int. Cl.: F16F 1/38, F16F 1/393

(54) **A resilient, vibration-damping support and a method of defining its characteristics**
Elastisches, schwingungsdämpfendes Lager und Verfahren zur Definierung von dessen Eigenschaften
Support élastique amortisseur et procédé de définition pour ses caractéristiques

(30) Priority: 31.08.2000 IT TO20000831
(43) Date of publication of application: 20.03.2002
(73) Proprietor: C.F. GOMMA S.p.A., 25050 Passirano (Brescia) (IT)
(72) Inventor: Vanessi, Gianni, 20099 Sesto S.Giovanni(Milano) (IT)
(74) Representative: Quinterno, Giuseppe

(56) References cited:
- EP-A- 0 819 556
- EP-A- 0 899 476
- DE-A- 19 854 559
- FR-A- 2 298 737
- US-A- 5 330 165

## Description

The present invention relates to resilient, vibration-damping supports and more specifically, its subject is a resilient support of the kind defined in the preamble of claim 1.

A resilient support of this kind is disclosed in DE-198 54 559-A.

The object of the invention is to propose a novel structure for a resilient support of this type which enables resilient supports to be produced easily and economically with static and dynamic resilience characteristics that can easily be differentiated in order to satisfy the most varied user requirements for the support of mechanical members and for minimizing the vibrations transmitted.

This and other objects are achieved, according to the invention, by a resilient support the main characteristics of which are defined in appended Claim 1.

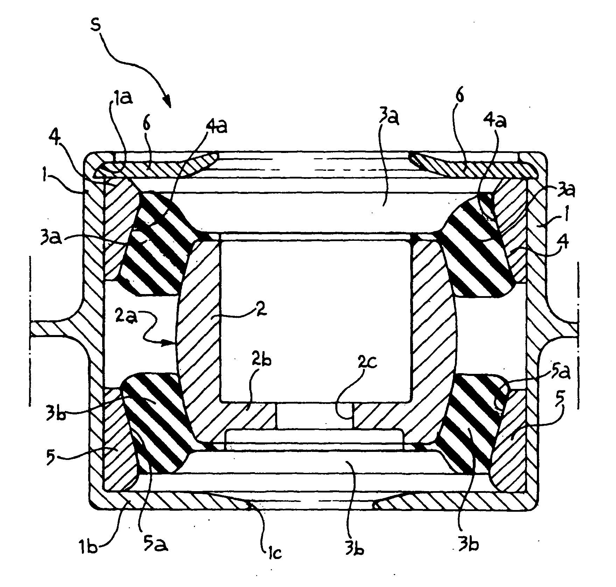

Further characteristics and advantages of the invention will become clear from the following detailed description, given purely by way of non-limiting example, with reference to the appended drawing, in which Figure 1 is an axial section through a support according to the invention.

In Figure 1, a resilient, vibration-damping support according to the invention is generally indicated S.

The support comprises a substantially beaker-shaped outer rigid framework 1 inside which an inner rigid framework 2 is disposed.

In the embodiment shown, a circumferential seat 1a is formed in the inner surface of the framework 1, in the vicinity of its upper edge.

The outer framework 1 also has an annular base wall 1b in the central portion of which an opening 1c is defined.

In the embodiment shown, the inner rigid framework 2 is substantially cup-shaped, with a rounded and convex lateral surface 2a. The inner framework 2 has a base wall 2b in the central portion of which an opening, indicated 2c, is defined.

In the embodiment shown by way of example in the drawing, two annular elements 3a and 3b, that is, an upper element and a lower element, respectively, made of a resiliently-deformable material, are interposed between the outer framework 1 and the inner framework 2. These elements may be made, for example, of rubber or of other elastomeric material, vulcanized *in situ* or fixed mechanically by another equivalent method.

The resiliently-deformable elements 3a and 3b extend between the upper and lower ends of the inner framework 2 and respective axial and radial retaining surfaces 4a and 5a of a first annular member and of a second annular member 4 and 5, which are mounted so as to be slidable axially on the inner surface of the outer rigid framework 1. The axial and radial retaining surfaces 4a, 5a of the rings 4, 5 are substantially conical and, as can be seen in the drawing, are oriented towards one another. The rings 4 and 5 are spaced apart axially.

The elements 3a and 3b made of resiliently-deformable material are interposed between the inner framework 2 and the rings 4, 5, in a radially compressed condition.

The elements are anchored to the inner framework 2 and to the rings 4 and 5 in one of various known ways. For example, the elements may be connected firmly to the rigid inner framework 2 by over-moulding and vulcanization.

When the unit formed by the inner framework 2, by the elements 3a and 3b, and by the associated axial and radial retaining rings 4 and 5 is fitted in the outer rigid framework 1, the unit naturally adopts a predetermined length which is defined below as its free length.

If the unit is compressed axially in the outer framework 1 by a suitable tool of known type, so as to bring about a reduction of its axial length relative to the value of its free length, the unit is preloaded or "pre-compressed" axially.

The above-defined pre-compression condition of the unit can be stabilized with the use of an axial retaining member such as the ring indicated 6 in Figure 1, which is restrained on the upper end edge of the outer rigid framework 1.

In the embodiment shown by way of example, the axial retaining ring 6 is engaged in the seat 1a of the outer framework 1 and is locked in position axially as a result of the turning-over of the end edge of the framework.

Naturally, other known solutions may be adopted instead of that described and illustrated.

In the assembled condition shown in Figure 1, the resiliently-deformable elements 3a and 3b of the resilient, vibration-damping support are pre-compressed both radially and axially. In the conditions of use, these elements are consequently not subject to tensile stress but at most to compression and shear stress, so that fatigue stressing of the elements is prevented. The useful operative life of the support is correspondingly increased.

A very important aspect of the resilient support according to the invention lies in the fact that its dynamic resilience characteristic is defined substantially by the geometry of its constituent elements and by the hardness of the resiliently-deformable material used. In particular, the dynamic resilience characteristic of the support is substantially independent of its degree of pre-compression.

The static resilience characteristic of the support as a whole, on the other hand, is substantially dependent on the extent of the pre-compression achieved.

In view of the foregoing, the dynamic and static resilience characteristics are reasonably independent of one another and can therefore easily be adapted to users' requirements, without requiring an excessive number of tests, that is, by varying the hardness of the resiliently-deformable material used and its degree of pre-compression, without significantly modifying the geometry of the rigid elements which are normally subject to predetermined dimensional constraints and in any case require expensive tooling for their production and/or modification.

The resiliently-deformable elements 3a and 3b may advantageously have internal cavities housing a liquid having suitable characteristics, in order to produce a hydroelastic support with improved vibration-filtering capabilities.

Moreover, in a further variant, not shown, the resiliently-deformable element or elements may be anchored to the inner surfaces of the outer framework and to the axial and radial retaining rings, which are mounted so as to be slidable on the outer (cylindrical) surface of the inner framework, in an arrangement which is the reverse of that shown.

Finally, it is pointed out that, in further variants, not shown, the axial and radial retaining rings may be replaced by annular projections of two axial portions of the same, inner or outer, framework, which portions are coupled with one another so as to be slidable axially and have associated axial retaining means of known type that can restrain them in an axially close-together condition in which they bring about the pre-compression of the resiliently-deformable element or elements.

## Claims

1. A resilient, vibration-damping support (S), comprising a outer rigid framework (1) and an inner rigid framework (2), between which at least two annular elements (3a, 3b) made of resiliently-deformable material are interposed in a radially compressed condition, wherein
the at least two elements (3a, 3b) are interposed between a first framework (1) and respective axial and radial retaining surfaces (4a, 5a) of a first annular member and of a second annular member (4, 5) which are mounted so as to be movable axially relative to the other framework (2) and are spaced apart axially,
axial retaining means (6) being associated with the annular members (4, 5) for restraining them in an axially close-together condition in which they bring about axial pre-compression of the at least two elements (3a, 3b) by means of their retaining surfaces (4a, 5a);
each annular element extending between the retaining surface (4a, 5a) of one of the annular members (4, 5) and one of the frameworks (2) ;
**characterized in that**
the said elements (3a, 3b) are made of materials having different hardnesses.

2. A resilient, vibration-damping support according to Claim 1 in which the annular elements (3a, 3b) have internal cavities which house a liquid.

3. A resilient, vibration-damping support according to any one of the preceding claims, **characterized in that** the at least one element (3a, 3b) made of resiliently-deformable material is anchored to one framework (1 or 2) of the support (S) by vulcanization or by an equivalent system and the pre-compression means are associated with the other framework (2 or 1).

4. A resilient, vibration-damping support according to any one of the preceding claims in which the axial retaining means comprise at least one annular stop element (6) restrained on one end of the outer framework (1).

5. A resilient, vibration-damping support according to any one of the preceding claims in which the axial retaining means (6) are arranged to bring about axial pre-compression of the at least one element (3a, 3b) in a manner such that, in the expected operative conditions of use, tensile stressing of the at least one element (3a, 3b) is prevented.

## Patentansprüche

1. Elastischer schwingungsdämpfender Träger (S), umfassend einen starren Außenrahmen (1) und einen starren Innenrahmen (2), zwischen denen im radial komprimierten Zustand zumindest zwei, aus einem elastisch verformbaren Material gefertigte, ringförmige Elemente (3a, 3b) eingeschoben sind, wobei
die zumindest zwei Elemente (3a, 3b) zwischen einem ersten Rahmen (1) und entsprechenden axialen und radialen Halteflächen (4a, 5a) eines ersten ringförmigen Bauglieds und eines zweiten ringförmigen Bauglieds (4, 5) eingeschoben sind, welche solcherart montiert sind, um in Bezug auf den anderen Rahmen (2) axial beweglich zu sein, und welche axial beabstandet sind,
wobei axiale Haltemittel (6) mit den ringförmigen Baugliedem (4, 5) verbunden sind, um diese in einem axial dicht aneinanderliegenden Zustand zu halten, in welchem sie mittels ihrer Halteflächen (4a, 5a) eine axiale Vorverdichtung der zumindest zwei Elemente (3a, 3b) bewirken;
wobei sich jedes ringförmige Element zwischen der Haltefläche (4a, 5a) eines der ringförmigen Bauglieder (4, 5) und einem der Rahmen (2) erstreckt;
**dadurch gekennzeichnet, dass** diese Elemente (3a, 3b) aus Materialien, die unterschiedliche Härten aufweisen, gefertigt sind.

2. Elastischer schwingungsdämpfender Träger gemäß Anspruch 1, wobei die ringförmigen Elemente (3a, 3b) innere Hohlräume aufweisen, die eine Flüssigkeit beherbergen.

3. Elastischer schwingungsdämpfender Träger gemäß einem der vorhergehenden Ansprüche, **dadurch gekennzeichnet, dass** das zumindest eine, aus einem elastisch verformbaren Material gefertigte Element (3a, 3b) durch Vulkanisation oder ein gleichwertiges System an einem Rahmen (1 oder 2) des Trägers (S) verankert ist und die Vorverdichtungsmittel mit dem anderen Rahmen (2 oder 1) verbunden sind.

4. Elastischer schwingungsdämpfender Träger gemäß einem der vorhergehenden Ansprüche, wobei die axialen Haltemittel zumindest ein an einem Ende des Außenrahmens (1) eingezwängtes, ringförmiges Anschlagelement (6) umfassen.

5. Elastischer schwingungsdämpfender Träger gemäß einem der vorhergehenden Ansprüche, wobei die axialen Haltemittel (6) dazu eingerichtet sind, eine axiale Vorverdichtung des zumindest einen Elements (3a, 3b) in einer solchen Weise zu bewirken, dass bei den erwarteten betrieblichen Verwendungsbedingungen eine Zugbeanspruchung des zumindest einen Elements (3a, 3b) verhindert wird.

## Revendications

1. Support élastique amortisseur (S), comprenant un châssis extérieur rigide (1) et un châssis intérieur rigide (2), entre lesquels au moins deux éléments annulaires (3a, 3b), réalisés à partir d'un matériau pouvant être déformé de manière élastique, sont interposés dans une condition radialement compressée, dans lequel
les au moins deux éléments (3a, 3b) sont interposés entre un premier châssis (1) et des surfaces de retenue axiales et radiales respectives (4a, 5a) d'un premier élément annulaire et d'un second élément annulaire (4, 5) qui sont montés de façon à être mobiles de manière axiale par rapport à l'autre châssis (2) et qui sont axialement espacés,
des moyens de retenue (6) sont associés aux éléments annulaires (4, 5) pour les retenir dans une condition où ils sont axialement proches l'un de l'autre dans laquelle ils entraînent une pré-compression axiale des au moins deux éléments (3a, 3b) au moyen de leurs surfaces de retenue (4a, 5a) ;
chaque élément annulaire s'étendant entre la surface de retenue (4a, 5a) d'un des éléments annulaires (4, 5) et un des châssis (2) ;
**caractérisé en ce que**
lesdits éléments (3a, 3b) sont réalisés à partir de matériaux ayant des degrés de rigidité différents.

2. Support élastique amortisseur selon la revendication 1, dans lequel les éléments annulaires (3a, 3b) ont des cavités internes qui reçoivent un liquide.

3. Support élastique amortisseur selon l'une quelconque des revendications précédentes, **caractérisé en ce que** le au moins un élément (3a, 3b) réalisé à partir d'un matériau pouvant être déformé de manière élastique est ancré à un châssis (1 ou 2) du support (S) par vulcanisation ou par un système équivalent et les moyens de pré-compression sont associés à l'autre châssis (2 ou 1).

4. Support élastique amortisseur selon l'une quelconque des revendications précédentes, dans lequel les moyens de retenue axiaux comprennent au moins un élément de butée annulaire (6) retenu sur une extrémité du châssis extérieur (1).

5. Support élastique amortisseur selon l'une quelconque des revendications précédentes, dans lequel les moyens de retenue axiaux (6) sont agencés de façon à entraîner la pré-compression axiale du au moins un élément (3a, 3b) de sorte que, dans les conditions fonctionnelles prévues, la contrainte de traction du au moins un élément (3a, 3b) soit empêchée.
